# EUROPEAN PATENT SPECIFICATION

(11) **EP 4 496 467 B1**
(45) Date of publication and mention of the grant of the patent: **17.06.2026**
(21) Application number: 23718040.1
(22) Date of filing: 20.03.2023
(51) Int. Cl.: A01G 20/47, A47L 5/14

(54) **GARDENING EQUIPMENT FOR BLOWING AND VACUUMING AND REDUCING THE VOLUME OF THE SUCKED MATERIAL**
GARTENGERÄTE ZUM BLASEN UND SAUGEN UND ZUR REDUZIERUNG DES VOLUMENS DES ANGESAUGTEN MATERIA
ÉQUIPEMENT DE JARDINAGE POUR LE SOUFFLAGE ET L'ASPIRATION ET LA RÉDUCTION DU VOLUME DE MATIÈRE ASPIRÉE

(30) Priority: 21.03.2022 IT 202200005486
(43) Date of publication of application: 29.01.2025
(73) Proprietor: Sileno, Beatrice, 28040 Varallo Pombia (NO) (IT)
(72) Inventor: Sileno, Beatrice, 28040 Varallo Pombia (NO) (IT)
(74) Representative: Bird & Bird Società tra Avvocati S.r.l.
(86) International application number: PCT/IB2023/052717
(87) International publication number: WO 2023/180903

(56) References cited:
- WO-A1-2016/161978
- CN-A- 101 135 139
- US-A- 5 711 048
- US-A1- 2015 266 599
- US-A1- 2020 071 895

## Description

### FIELD OF THE INVENTION

The present invention relates to gardening equipment for blowing and sucking plant material. More specifically, the equipment can also suck and collect plant material inside a suitable container, such as a compostable bag, and even reduce the volume of the material collected inside the container.

### STATE OF THE ART

At present, there are many types of machines on the market in the gardening sector. In general, machinery is known for pruning or cutting, e.g. for pruning plants or cutting grass; machinery is also known for handling plant waste from pruning or mowing or periodic and seasonal cleaning of gardens, e.g. blowers and vacuum cleaners.

A blower typically comprises a motor, e.g. an electric motor or an internal combustion engine, and a fan housed in an enclosure to which a tubular element is connected for the outlet of air. The fan is driven by the engine or motor and generates a high-speed air flow exiting from the tubular element. By purposely directing the blower (and consequently the air flow exiting therefrom) it is possible to sweep an outdoor area, particularly of leaves, grass clippings or other debris.

However, a traditional blower only allows blowing, typically creating piles of plant material that must then be manually collected by the user and disposed of.

Generally, a sucker is similar to a blower in which the air flow flows in the opposite direction. In other words, air is sucked in by the tubular element and discharged through an outlet in the housing; obviously, the sucked air flow can also drag in plant material, such as leaves and grass clippings, that are to be removed. In use, a sucker typically also includes a collection bag attached to the outlet of the housing, in order to collect the sucked material that must be subsequently emptied. WO 2016/161978 A1 illustrates such a gardening apparatus for blowing and sucking plant material.

However, blown or sucked plant material (especially if it contains leaves) remains very bulky and inconvenient to dispose of. In fact, several trips are necessary if a car or small transport vehicle is used in order to dispose of the leaves properly in the collection centres. A further critical factor may be the large volumes created within the collection centres themselves, e.g. at recycling stations.

Alternatively, people may find themselves engaging in behaviour that is dangerous and harmful to the environment: for example, plant material is very often burned.

### SUMMARY

The general purpose of the present invention is to provide a gardening apparatus for blowing and sucking plant material according to claim 1.

A first, more specific purpose of the present invention is to provide a gardening apparatus able to suck and shred plant material while reducing its volume.

This general object and other more specific objects are reached thanks to what is expressed in the appended claims that form an integral part of the present description.

### LIST OF FIGURES

The present invention shall become more readily apparent from the detailed description that follows to be considered together with the accompanying drawings in which:
Fig. 1 shows an exploded view of an example of a gardening apparatus for blowing and sucking an air flow associated with a first example of an outdoor cleaning accessory,
Fig. 2 shows a side sectional view of the embodiment of the apparatus of Fig. 1,
Fig. 3 shows a side sectional view of the embodiment of the apparatus of Fig. 1 to which a container is fixed for collecting plant material, and
Fig. 4 shows a side sectional view of the embodiment of the apparatus of Fig. 1 associated with a second example of an accessory for cleaning outdoor areas.

As can be easily understood, there are various ways of practically implementing the present invention which is defined in its main advantageous aspects in the appended claims and is not limited either to the following detailed description or to the appended drawings.

### DETAILED DESCRIPTION

With general reference to the various figures, a preferred, but not limiting, embodiment of a gardening apparatus according to the present invention is shown, indicated in its entirety by the numerical reference 100. It will be referred to below with the abbreviated notation "apparatus 100".

The apparatus 100 is suitable for use in outdoor spaces, particularly gardens, courtyards, verandas or porches, for blowing and sucking plant material, reducing the volume of the sucked material, as will be better described below. In other words, the apparatus 100 is suitable for cleaning outdoor spaces, in particular for collecting material from outdoor spaces. The apparatus 100 is useful for blowing and sucking plant material present in particular on the ground of the outdoor space, such as leaves, needles, twigs, grass clippings, but also pollen and seeds, and advantageously accumulating it in a suitable portion of the outdoor space or in a suitable container that allows the volume to be reduced and thus disposed of more easily, as will be better explained below.

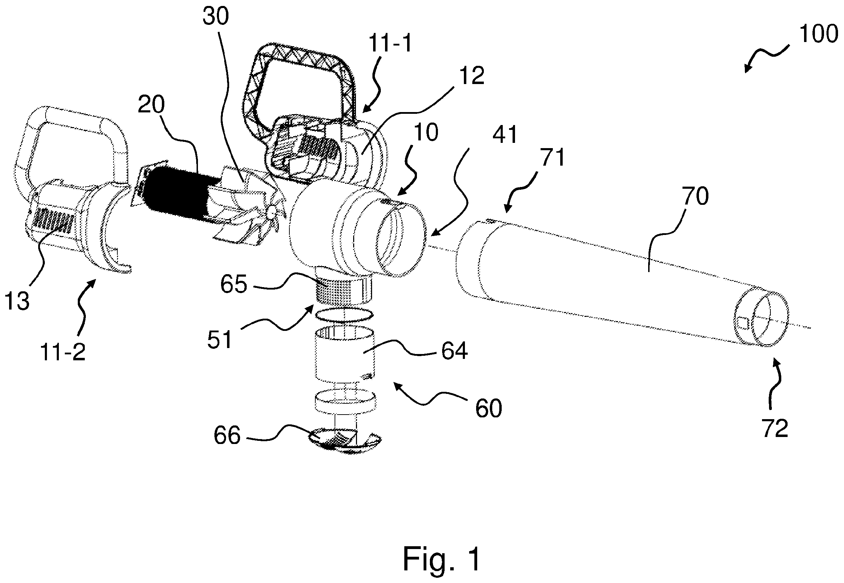

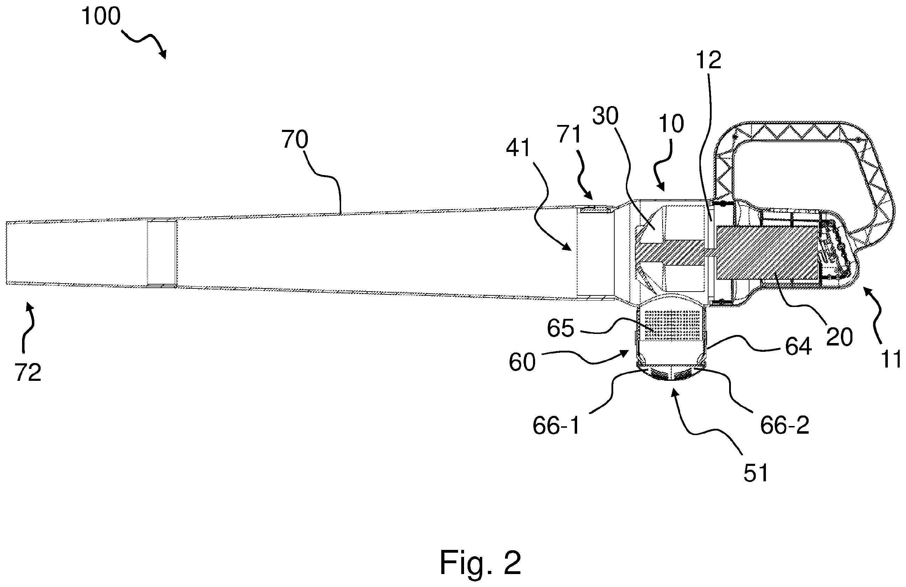

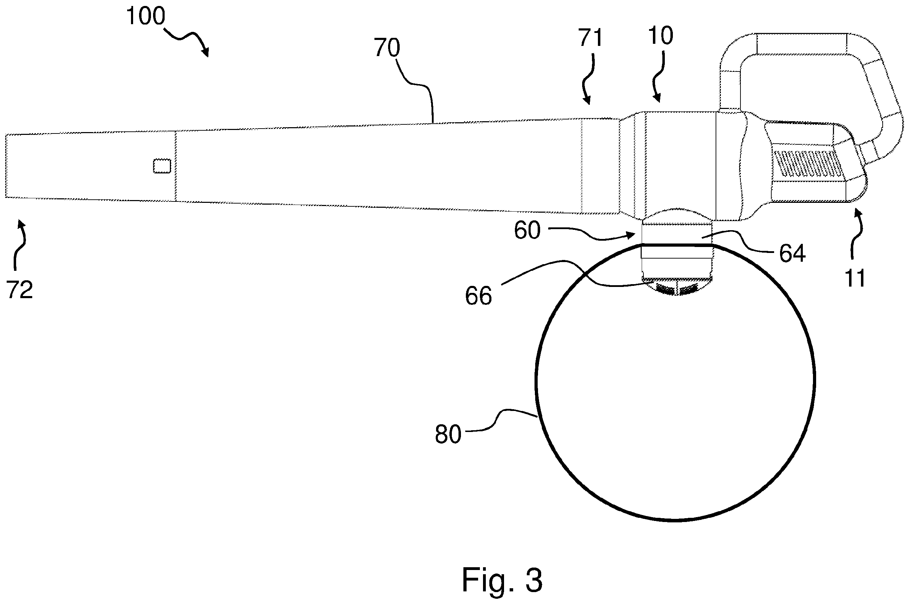

Figure 1 shows an exploded view of an embodiment of the apparatus 100, Figure 2 shows a side sectional view of the embodiment of Figure 1 and Figure 3 shows a side view of the embodiment of Figure 1.

With non-limiting reference to Fig. 1 and 2, the apparatus 100 comprises at least one impeller 30, typically made of metal, mechanically connected to a device adapted to rotate the impeller 30, for example an engine or motor 20, in particular an internal combustion engine or an electric motor. In particular, the impeller 30 is connected via a rotating shaft to the motor 20; advantageously, engine or motor 20 can be connected to a storage battery. With particular reference to Fig. 1, the impeller 30 is arranged in a housing 10 comprising a first opening 41 and a second opening 51; preferably, the housing 10 defines a closed cavity fluidically connected to an external environment via the first opening 41 and the second opening 51.

According to some embodiments, the engine or motor 20 is arranged in an enclosure 11 mechanically connected to the housing 10 (note that in Fig. 1 two portions 11-1 and 11-2 of the enclosure 11 are shown which, when paired, form the same enclosure 11). Advantageously, the housing 10 or enclosure 11 comprises a wall 12 capable of fluidically separating the housing 10 and the enclosure 11. Even more advantageously, the enclosure 11 can provide openings 13 such as holes or slots, to aid the cooling of the engine or motor 20. According to an embodiment of a portable apparatus 100, the enclosure 11 may further provide suitable means for moving and transporting the apparatus 100, for example handles and/or straps.

According to the present invention, the engine or motor 20 is adapted to operate in a first direction of rotation and a second direction of rotation. In particular, the apparatus 100 may include a control unit adapted to control the operation of the engine or motor 20. For example, the control unit can operate the engine or motor 20 according to the first direction of rotation or the second direction of rotation or keep the engine or motor 20 stationary or vary the speed of rotation of the engine or motor 20. In particular, the control unit can receive input from a user, e.g. via a keypad, to select one of the operating modes of the engine or motor 20. Advantageously, the control unit can also vary the power of the engine or motor 20 when the engine or motor 20 rotates according to the first direction of rotation or the second direction of rotation; for example, the user can generate an input to the control unit by adjusting a knob or selecting a key to adjust the suction/blowing power of the apparatus 100.

When the engine or motor 20 operates according to the first direction of rotation, the impeller 30 is adapted to generate a first air flow entering from the first opening 41 and exiting from the second opening 51, and when the engine or motor 20 is operating according to the second direction of rotation, the impeller 30 is adapted to generate a second air flow entering from the second opening 51 and exiting from the first opening 41. In other words, when the engine or motor 20 operates according to the first direction of rotation, the apparatus 100 operates as a blower that sucks a first air flow into the first opening 41 and discharges it from the second opening 51, crossing the impeller 30, and when the engine or motor 20 operates according to the second direction of rotation, the apparatus 100 operates as a blower that sucks a second air flow into the second opening 51 and discharges it from the first opening 41, crossing the impeller 30. With non-limiting reference to Fig. 3, the second opening 51 is suitable to be coupled to a container 80 for collecting the sucked material, in particular a gas-tight container 80; advantageously, the container 80 is made of compostable and/or biodegradable material, e.g. a compostable and/or biodegradable bag. It should be noted that when the engine or motor 20 operates according to the second direction of rotation, i.e. when the apparatus 100 operates as a blower, the air flow sucked in by the second opening 51 is capable of reducing the volume of the container 80. Specifically, the impeller 30 comprises blades designed so that the direction of the first/second incoming air flow and the direction of the first/second outgoing air flow define an angle comprised in a range between 45° and 135°. Preferably, the direction of the first/second incoming air flow and the direction of the first/second outgoing air flow are essentially perpendicular to each other. Advantageously, the impeller blades can vary their pitch (i.e., the impeller blades can be rotated about their own longitudinal axis so as to change their pitch angle) according to the direction of rotation of the engine or motor 20 (and thus of the impeller 30); advantageously, the control unit is further configured to adjust the pitch of the impeller blades according to the direction of rotation of the engine or motor.

It should be noted that the first air flow can drag in plant material with it entering from the first opening 41. Advantageously, impeller 30 can be further adapted to shred incoming plant material entering from the first opening 41. For example, the blades of the impeller 30 could be appropriately designed to shred the incoming plant material; alternatively, the impeller 30 could have two sections, a first section designed to generate the first/second air flow and a second section designed to shred the incoming plant material. It cannot be ruled out that the apparatus 100 additionally includes a shredding means upstream of the impeller 30 (not shown in any of the figures), for example a rotary blade keyed to the shaft of the impeller 30, in particular adapted to pre-shred incoming plant material.

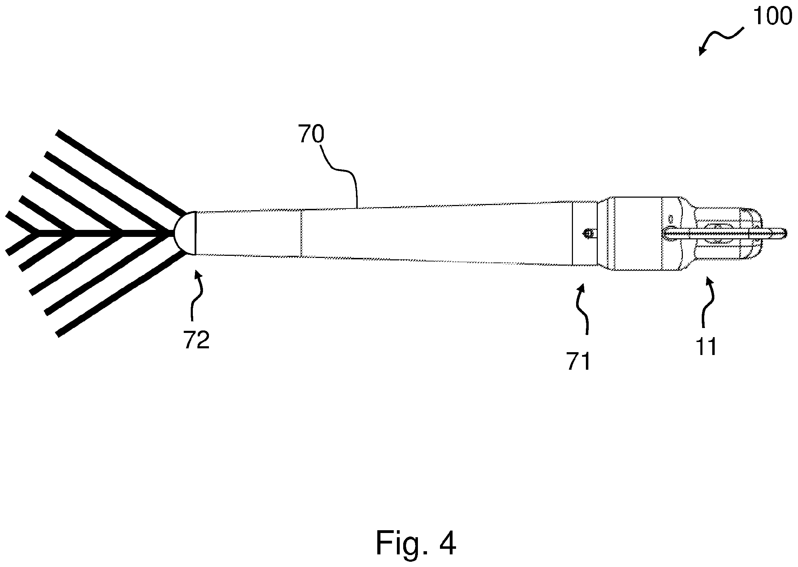

Advantageously, the first opening 41 may be connected to an accessory, in particular an accessory tubular element 70, for example to facilitate the inlet of the first air flow (and plant material) or the outlet of the second air flow, or other types of accessories for cleaning outdoor spaces. For example, the accessory tubular element 70 may comprise a first end 71 adapted to be connected to the first opening 41 and a second end 72, the first end 71 having a first section and the second end 72 having a second section of substantially the same size or smaller than the first section. For example, the first section may be a circular section and the second section may be a circular or elliptical section smaller than the first circular section. According to a further embodiment, the accessory tubular element 70 may be configured to optimise the collection of plant material; in particular, the second end 72 of the accessory tubular element 70 may comprise a portion configured like a rake (see, for example, Fig. 4) or it may include a portion configured like a brush, in particular a rotating brush, or a hose to which lances or other accessories for blowing, inflating and/or deflating can be attached. Advantageously, the apparatus 100 further comprises a sensor associated with the first opening 41 and able to signal to the control unit the coupling of the accessory tubular element 70 to the housing 10, in particular to the first opening 41. Advantageously, the control unit is further configured to operate the engine or motor 20 only in the case of a correct coupling between the accessory tubular element 70 and the first opening 41.

According to a preferred embodiment shown in Fig. 1-3, the second opening 51 is associated with a portion 65 having a plurality of openings, for example a plurality of holes or slots, and a movable closing means 60. In particular, the closing means 60 is adapted to selectively and alternately switch from a closing configuration of the openings of the portion 65 (see for example Fig. 2 and Fig. 3) to an opening configuration of the openings of the portion 65. With non-limiting reference to Fig. 1, the portion 65 is, for example, a cylindrical portion that at least partially defines the second opening 51. Advantageously, the closing means 60 comprises a tubular element 64 fluidically connected to the second opening 51, in particular to the portion 65, and defining a passage for the first and/or second air flow. According to the embodiment shown in the figures, the tubular element 64 is mechanically connected to the portion 65, i.e. it is axially sliding on the portion 65, in particular by means of a system of grooves and protuberances, in such a way as to assume at least two configurations: a first configuration in which the tubular element 64 is superimposed on the portion 65 and closes the openings of the portion 65, preventing the outlet/inlet of the first/second air flow, and a second configuration in which the tubular element 64 is not superimposed on the portion allowing the outlet/inlet of the first/second air flow from the openings of the portion 65. Alternatively, the tubular element 65 could be a ring nut that rotates on the portion 65 and, depending on the angle of rotation, closes or opens the openings of the portion 65. In particular, the closing means 60 is adapted to assume the opening configuration of the openings of the portion 65 when the engine or motor 20 is operating according to the first direction of rotation, i.e. when it generates the first air flow (and plant material) entering at the first opening 41, so that at least part of the first air flow, once it has passed through the impeller 30, can exit from the openings of the portion 65.

It should be noted that the movement of the tubular element 65 in the opening or closing configuration of the openings of the portion 65 can be performed manually by the user or be automatic, e.g. it can be adjusted by the control unit after receiving an input from the user. Advantageously, the second opening 51 is further associated with a device adapted to allow the passage of air and prevent the passage of shredded material, in particular a movable grille 66 (see, for example, Fig. 1-3) adapted to switch selectively and alternately from an open position, in which the passage of plant material is allowed through the second opening 51, to a closed position, in which the passage of plant material through the second opening 51 is blocked; advantageously, the grille 66 is adapted to allow the passage of an air flow, as will be further explained below. Advantageously, the grille 66 is adapted to assume the closed position when the engine or motor 20 is operating according to the second direction of rotation, i.e. when the second inlet air flow from the second opening 51 is generated, thereby blocking the passage of the plant material from the second opening 51 to the impeller 30; in other words, when the grille 66 is in the closed position, the plant material is blocked, so that it remains inside the container 80, while the air can pass through the grille 66, exiting from the container 80. Even more advantageously, the grille 66 is adapted to assume at least one open position when the engine or motor 20 is operating according to the first direction of rotation, i.e. when it generates the first air flow entering from the first opening 41, allowing the passage of plant material from the first opening 41 to the impeller 30. It should be noted that the grille 66 may open due to the weight of the plant material which is dragged by the first air flow in the vicinity of the grille 66; alternatively, the grille 66 may open by mechanical actuation, for example by means of elements susceptible to mechanical or non-permanent elastic displacement, in particular by means of springs, which, when subjected to a force (in particular due to the weight of the plant material or generated by a user or controlled by a control unit via an actuator, for example a trigger or a lever), open the grille 66, in particular a first door 66-1 and a second door 66-2 of the grille 66. With non-limiting reference to Fig. 3, the second opening 51 is fluidically connected to the container 80, preferably a compostable container, e.g. a compostable bag. Specifically, the container 80 is adapted to collect plant material at the outlet from the second opening 51 when the engine or motor 20 is operating in the first direction of rotation. Advantageously, the apparatus 100 further comprises fixing means for fixing the container 80 directly or indirectly to the second opening 51. According to a first example of use of the apparatus 100, when the engine or motor 20 is operating according to the first direction of rotation, the tubular element 65 is in the opening configuration of the openings of the portion 65 and a first air flow is generated and plant material dragged into the first opening 41 and out from the second opening 51. In particular, the first air flow can exit from the openings of the portion 65 while the plant material can generate the opening of the grille 66 and be discharged into the container 80 connected to the second opening 51. Once the plant material has been collected in the container 80, preferably up to a predetermined maximum capacity of the container 80, advantageously monitored by means of an appropriate sensor, the tubular element 65 is moved into a closed configuration of the openings of the portion 65 and the engine or motor 20 is subsequently operated according to the second direction of rotation (while the grille 66 is in the closed position, i.e. preventing the entry of plant material from the second opening 51) so that the apparatus 100 generates a second air flow entering from the second opening 51 and exiting from the first opening 41. In other words, the equipment 100, in particular the impeller 30 sucks in a second air flow from the container 80 and discharges it from the first opening 41, thus reducing the volume of the container 80 (the container 80 can be said to be in a vacuum condition). Advantageously, the step of reducing the volume of the container 80, i.e. the step in which the engine or motor 20 operates according to the second direction of rotation, can be of a predetermined duration. Even more advantageously, the apparatus 100 further comprises closing means for closing, in particular sealing, the container 80; for example, once the volume of the container 80 has been reduced, the container 80 can be sealed using heat-sealing means, so that the container 80 remains in a vacuum condition even after the suction of air from the container has ceased, i.e. even when the apparatus 100, in particular the engine or motor 20, is no longer operating.

According to a further example of use of the apparatus 100, when the engine or motor 20 is operating according to the second direction of rotation, the container 80 is not connected to the second opening 51 and a second air flow is generated entering from the second opening 51 and exiting from the first opening 41, for example to blow leaves placed on the ground of the outdoor space where the apparatus 100 is used. According to this last example of use, the user can indifferently decide whether to keep the openings of the portion 65 in an open or closed configuration.

## Claims

1. Gardening apparatus (100) for blowing and sucking plant material, comprising an engine or motor (20), at least one impeller (30) mechanically connected to said engine or motor (20), a housing (10) in which said impeller (30) is arranged and a container (80), said housing (10) comprising a first opening (41) and a second opening (51),
said engine or motor (20) being adapted to operate in a first direction of rotation and a second direction of rotation,
said impeller (30) being adapted to generate a first air flow entering from said first opening (41) and exiting from said second opening (51) when said engine or motor (20) is operating according to said first direction of rotation and to generate a second air flow entering from said second opening (51) and exiting from said first opening (41) when said engine or motor (20) is operating according to said second direction of rotation,
wherein said second opening (51) is fluidly coupled to the container (80),
wherein when said engine or motor (20) is operating according to said first direction of rotation the first air flow drags plant material with it and the container (80) collects the plant material dragged at the outlet from the second opening (51), and
the gardening apparatus is **characterised in that** when said engine or motor (20) is operating according to said second direction of rotation, the second air flow reduces the volume of the container (80).

2. Gardening apparatus (100) according to claim 1, wherein, when said engine or motor (20) is operating according to said second direction of rotation, said second air flow is further adapted to generate vacuum conditions in said container 80.

3. Gardening apparatus (100) according to claim 1, further comprising a control unit adapted to control the operation of said engine or motor (20), wherein said control unit is selectively adapted to:
- operate said engine or motor (20) according to said first direction of rotation,
- operate said engine or motor (20) according to said second direction of rotation,
- keep said engine or motor (20) stationary
- vary the speed of said engine or motor (20).

4. Gardening apparatus (100) according to claim 1, wherein said impeller (30) is further adapted to shred the plant material entering from said first opening (41), said plant material being dragged by said first air flow.

5. Gardening apparatus (100) according to claim 1, wherein said second opening (51) is associated with:
- a portion (65) provided with a plurality of openings, and
- a movable closing means (60), said closing means (60) being adapted to selectively and alternately switch from a closed configuration of the openings of said portion (65) to an open configuration of said openings of said portion (65).

6. Gardening apparatus (100) according to claim 5, wherein said closing means (60) is adapted to assume said opening configuration of said portion (65) when said engine or motor (20) is operating according to said first direction of rotation.

7. Gardening apparatus (100) according to claim 5, wherein said closing means (60) comprises a tubular element (64) fluidically connected to said second opening (51), said tubular element (64) defining a passage for said first and/or second air flow.

8. Gardening apparatus (100) according to claim 1, wherein said second opening (51) is associated with a movable grille (66), said grille (66) being adapted to selectively and alternately switch from an open position to a closed position, wherein when said grille (66) is in said closed position it is adapted to block the passage of a flow of plant material.

9. Gardening apparatus (100) according to claim 8, wherein said grille (66) is adapted to assume said closed position when said engine or motor (20) is operating according to said second direction of rotation.

10. Gardening apparatus (100) according to claim 1, further comprising fixing means, said fixing means being adapted to fix the container (80), preferably the container (80) being a compostable container, directly or indirectly to said second opening (51).

11. Gardening apparatus (100) according to claim 1, further comprising closing means, said closing means being adapted to close said container (80).

12. Gardening apparatus (100) according to claim 1, wherein said first opening (41) is adapted to be connected to an accessory tubular element (70), in particular configured like a rake at one end, or other types of accessories for cleaning outdoor spaces.

## Patentansprüche

1. Gartengerät (100) zum Blasen und Saugen von Pflanzenmaterial, umfassend eine Maschine bzw. einen Motor (20), mindestens ein Laufrad (30), das mechanisch mit der Maschine bzw. dem Motor (20) verbunden ist, ein Gehäuse (10), in dem das Laufrad (30) angeordnet ist, und einen Behälter (80),
wobei das Gehäuse (10) eine erste Öffnung (41) und eine zweite Öffnung (51) umfasst,
wobei die Maschine bzw. der Motor (20) angepasst ist, um in einer ersten Drehrichtung und einer zweiten Drehrichtung zu arbeiten,
wobei das Laufrad (30) dazu angepasst ist, einen ersten Luftstrom zu erzeugen, der aus der ersten Öffnung (41) eintritt und aus der zweiten Öffnung (51) austritt, wenn die Maschine bzw. der Motor (20) gemäß der ersten Drehrichtung arbeitet, und einen zweiten Luftstrom zu erzeugen, der aus der zweiten Öffnung (51) eintritt und aus der ersten Öffnung (41) austritt, wenn die Maschine bzw. der Motor (20) gemäß der zweiten Drehrichtung arbeitet,
wobei die zweite Öffnung (51) fluidisch mit dem Behälter (80) gekoppelt ist,
wobei, wenn die Maschine bzw. der Motor (20) gemäß der ersten Drehrichtung arbeitet, der erste Luftstrom Pflanzenmaterial mit sich zieht und der Behälter (80) das mitgezogene Pflanzenmaterial am Auslass der zweiten Öffnung (51) sammelt, und
das Gartengerät **dadurch gekennzeichnet ist, dass**, wenn die Maschine bzw. der Motor (20) gemäß der zweiten Drehrichtung arbeitet, der zweite Luftstrom das Volumen des Behälters (80) verringert.

2. Gartengerät (100) nach Anspruch 1, wobei, wenn die Maschine bzw. der Motor (20) gemäß der zweiten Drehrichtung arbeitet, der zweite Luftstrom ferner angepasst ist, um Vakuumbedingungen in dem Behälter 80 zu erzeugen.

3. Gartengerät (100) nach Anspruch 1, ferner umfassend eine Steuereinheit, die angepasst ist, um den Betrieb der Maschine bzw. des Motors (20) zu steuern, wobei die Steuereinheit selektiv angepasst ist, zum:
- Betreiben der Maschine bzw. des Motors (20) gemäß der ersten Drehrichtung,
- Betreiben der Maschine bzw. des Motors (20) gemäß der zweiten Drehrichtung,
- Halten der Maschine bzw. des Motors (20) stationär,
- Variieren der Drehzahl der Maschine bzw. des Motors (20).

4. Gartengerät (100) nach Anspruch 1, wobei das Laufrad (30) ferner angepasst ist, um das Pflanzenmaterial, das aus der ersten Öffnung (41) eintritt, zu zerkleinern, wobei das Pflanzenmaterial durch den ersten Luftstrom mitgezogen wird.

5. Gartengerät (100) nach Anspruch 1, wobei die zweite Öffnung (51) assoziiert ist mit:
- einem Abschnitt (65), der mit einer Vielzahl von Öffnungen versehen ist, und
- einem beweglichen Verschlussmittel (60), wobei das Verschlussmittel (60) angepasst ist, um selektiv und abwechselnd von einer geschlossenen Konfiguration der Öffnungen des Abschnitts (65) zu einer offenen Konfiguration der Öffnungen des Abschnitts (65) zu wechseln.

6. Gartengerät (100) nach Anspruch 5, wobei das Verschlussmittel (60) angepasst ist, um die Öffnungskonfiguration des Abschnitts (65) einzunehmen, wenn die Maschine bzw. der Motor (20) gemäß der ersten Drehrichtung arbeitet.

7. Gartengerät (100) nach Anspruch 5, wobei das Verschlussmittel (60) ein Rohrelement (64) umfasst, das fluidisch mit der zweiten Öffnung (51) verbunden ist, wobei das Rohrelement (64) einen Durchgang für den ersten und/oder zweiten Luftstrom definiert.

8. Gartengerät (100) nach Anspruch 1, wobei die zweite Öffnung (51) mit einem beweglichen Gitter (66) assoziiert ist, wobei das Gitter (66) angepasst ist, um selektiv und abwechselnd von einer offenen Position in eine geschlossene Position zu wechseln, wobei, wenn sich das Gitter (66) in der geschlossenen Position befindet, es angepasst ist, um den Durchgang eines Stroms von Pflanzenmaterial zu sperren.

9. Gartengerät (100) nach Anspruch 8, wobei das Gitter (66) angepasst ist, um die geschlossene Position einzunehmen, wenn die Maschine bzw. der Motor (20) gemäß der zweiten Drehrichtung arbeitet.

10. Gartengerät (100) nach Anspruch 1, ferner umfassend Befestigungsmittel, wobei die Befestigungsmittel angepasst sind, um den Behälter (80) direkt oder indirekt an der zweiten Öffnung (51) zu befestigen, wobei der Behälter (80) vorzugsweise ein kompostierbarer Behälter ist.

11. Gartengerät (100) nach Anspruch 1, ferner umfassend Verschlussmittel, wobei das Verschlussmittel angepasst ist, um den Behälter (80) zu verschließen.

12. Gartengerät (100) nach Anspruch 1, wobei die erste Öffnung (41) angepasst ist, um mit einem Zubehörrohrelement (70), das insbesondere an einem Ende wie ein Rechen konfiguriert ist, oder anderen Arten von Zubehör zum Reinigen von Außenräumen verbunden zu werden.

## Revendications

1. Appareil de jardinage (100) pour souffler et aspirer des matières végétales, comprenant un moteur (20), au moins une roue (30) reliée mécaniquement audit moteur (20), un boîtier (10) dans lequel est disposée ladite roue (30) et un récipient (80),
ledit boîtier (10) comprend une première ouverture (41) et une seconde ouverture (51),
ledit moteur (20) étant adapté pour fonctionner dans un premier sens de rotation et dans un second sens de rotation,
ladite roue (30) étant adaptée pour générer un premier flux d'air entrant par ladite première ouverture (41) et sortant par ladite seconde ouverture (51) lorsque ledit moteur (20) fonctionne selon ledit premier sens de rotation et pour générer un second flux d'air entrant par ladite seconde ouverture (51) et sortant par ladite première ouverture (41) lorsque ledit moteur (20) fonctionne selon ledit second sens de rotation,
dans lequel ladite seconde ouverture (51) est couplée fluidiquement au récipient (80),
dans lequel, lorsque ledit moteur (20) fonctionne selon ledit premier sens de rotation, le premier flux d'air entraîne les matières végétales et le récipient (80) recueille les matières végétales entraînées à la sortie de la seconde ouverture (51), et
l'appareil de jardinage est **caractérisé en ce que**, lorsque ledit moteur (20) fonctionne selon le second sens de rotation, le second flux d'air réduit le volume du récipient (80).

2. Appareil de jardinage (100) selon la revendication 1, dans lequel, lorsque ledit moteur (20) fonctionne selon ledit second sens de rotation, ledit second flux d'air est en outre adapté pour générer des conditions de vide dans ledit récipient 80.

3. Appareil de jardinage (100) selon la revendication 1, comprenant en outre une unité de commande adaptée pour commander le fonctionnement dudit moteur (20), dans lequel ladite unité de commande est sélectivement adaptée pour :
- faire fonctionner ledit moteur (20) selon le premier sens de rotation,
- faire fonctionner ledit moteur (20) selon le second sens de rotation,
- maintenir ledit moteur (20) à l'arrêt
- faire varier la vitesse dudit moteur (20).

4. Appareil de jardinage (100) selon la revendication 1, dans lequel ladite roue (30) est en outre adaptée pour déchiqueter les matières végétales entrant par ladite première ouverture (41), lesdites matières végétales étant entraînées par ledit premier flux d'air.

5. Appareil de jardinage (100) selon la revendication 1, dans lequel ladite seconde ouverture (51) est associée à :
- une partie (65) pourvue d'une pluralité d'ouvertures, et
- un moyen de fermeture mobile (60), ledit moyen de fermeture (60) étant adapté pour passer sélectivement et alternativement d'une configuration fermée des ouvertures de ladite partie (65) à une configuration ouverte desdites ouvertures de ladite partie (65).

6. Appareil de jardinage (100) selon la revendication 5, dans lequel ledit moyen de fermeture (60) est adapté pour prendre ladite configuration d'ouverture de ladite partie (65) lorsque ledit moteur (20) fonctionne selon ledit premier sens de rotation.

7. Appareil de jardinage (100) selon la revendication 5, dans lequel ledit moyen de fermeture (60) comprend un élément tubulaire (64) relié fluidiquement à ladite seconde ouverture (51), ledit élément tubulaire (64) définissant un passage pour ledit premier et/ou second flux d'air.

8. Appareil de jardinage (100) selon la revendication 1, dans lequel ladite seconde ouverture (51) est associée à une grille mobile (66), ladite grille (66) étant adaptée pour passer sélectivement et alternativement d'une position ouverte à une position fermée, dans lequel lorsque ladite grille (66) est dans ladite position fermée, elle est adaptée pour bloquer le passage d'un flux de matières végétales.

9. Appareil de jardinage (100) selon la revendication 8, dans lequel ladite grille (66) est adaptée pour prendre ladite position fermée lorsque ledit moteur (20) fonctionne selon ledit second sens de rotation.

10. Appareil de jardinage (100) selon la revendication 1, comprenant en outre un moyen de fixation, ledit moyen de fixation étant adapté pour fixer le récipient (80), de préférence le récipient (80) étant un récipient compostable, directement ou indirectement à ladite seconde ouverture (51).

11. Appareil de jardinage (100) selon la revendication 1, comprenant en outre un moyen de fermeture, ledit moyen de fermeture étant adapté pour fermer ledit récipient (80).

12. Appareil de jardinage (100) selon la revendication 1, dans lequel ladite première ouverture (41) est adaptée pour être reliée à un élément tubulaire accessoire (70), notamment configuré comme un râteau au niveau d'une extrémité, ou d'autres types d'accessoires pour le nettoyage d'espaces extérieurs.
